# EUROPEAN PATENT SPECIFICATION

(11) **EP 3 157 159 B1**
(45) Date of publication and mention of the grant of the patent: **10.03.2021**
(21) Application number: 16192211.7
(22) Date of filing: 04.10.2016
(51) Int. Cl.: H02P 6/24, H02P 3/18

(54) **ELECTROMECHANICAL APPARATUS AND STOP CONTROL METHOD FOR ELECTROMECHANICAL APPARATUS**
ELEKTROMECHANISCHE VORRICHTUNG UND STOPPSTEUERUNGSVERFAHREN FÜR DIE ELEKTROMECHANISCHE VORRICHTUNG
APPAREIL ÉLECTROMÉCANIQUE ET PROCÉDÉ DE COMMANDE D'ARRÊT D'APPAREIL ÉLECTROMÉCANIQUE

(30) Priority: 07.10.2015 JP 2015199807
(43) Date of publication of application: 19.04.2017
(73) Proprietor: Alps Alpine Co., Ltd., Tokyo 145-8501 (JP)
(72) Inventor: MIYAKO, Ikuyasu, Tokyo, Tokyo 145-8501 (JP); KIMURA, Wataru, Tokyo, Tokyo 145-8501 (JP)
(74) Representative: Schmitt-Nilson Schraud Waibel Wohlfrom Patentanwälte Partnerschaft mbB

(56) References cited:
- JP-A- H11 184 528
- JP-A- 2007 159 336
- JP-A- 2015 107 669
- US-A- 6 040 673

## Description

### BACKGROUND OF THE INVENTION

### 1. Field of the Invention

The present invention relates to an electromechanical apparatus and a stop control method for the electromechanical apparatus.

### 2. Description of the Related Art

An electromechanical apparatus including a motor moves various members by the rotation of a motor rotation shaft. For example, a shift apparatus which is one type of electromechanical apparatus switches a transmission through operation of an operation knob. In some electromechanical apparatuses of this type, an operation knob housed in an operation panel so as to be flush with the operation panel protrudes from the operation panel when an ignition switch is turned on. The operation knob is moved by converting the rotation of the motor into translational motion. The operation knob, which is necessary for the operation of a vehicle, needs to be moved to a predetermined position within a predetermined time.

The up-and-down-type operation knob described above, needs to be quickly stopped within a short moving distance and, hence, a collision sound is generated by a member such as a gear within an electromechanical apparatus at the time of stopping. In an environment where there is a person in the vicinity or in a quiet closed environment there may be a case where even a small collision sound is thought to be a noise. Hence, there is a requirement that even a slight sound generated at the time when an electromechanical apparatus stops be suppressed.

Japanese Unexamined Patent Application Publication No. 11-235065 discloses a technique in which a torque is controlled so as to be lower than a limit value during a stop operation in order to suppress oscillation generated before the operation is stopped. In other words, in the method disclosed in Japanese Unexamined Patent Application Publication No. 11-235065, the rotation of a motor rotation shaft is detected and in accordance with the detection result, the torque is maintained below a limit value by feedback control. In this method, for safe control, after the stop operation is started and before an actual stop, the rotation needs to be generated to some extent. However, in the case where a quick stop is required within a short moving distance, it is necessary to suppress as far as possible the rotation after the start of the stop operation and before the actually stopped state is entered.

The present invention has been realized in view of such circumstances, and provides an electromechanical apparatus and a stop control method for the electromechanical apparatus allowing a sound during the stop time to be reduced while suppressing the rotation after the start of the stop operation and before the actually stopped state is entered.

US 6 040 673 A discloses a motor control apparatus supplies a current to the motor according to the control either by an average current controller or by an instantaneous current controller. The selection of the controller is done by a switching command signal selector, which selects the average current controller when the position deviation is within a specified range, and selects the instantaneous current controller when the position deviation is outside this specified range.

JP 2015 107669 A discloses an electromechanical apparatus including: a motor that includes a rotation shaft and that applies to the rotation shaft a torque in a direction toward an angular position in accordance with control; a rotation sensor detecting an angular position of the rotation shaft; and a motor control unit controlling rotation of the rotation shaft by switching an angular position to which the rotation shaft rotates in accordance with an angular position detected by the rotation sensor.

### SUMMARY OF THE INVENTION

The present invention is defined by the independent claims 1 and 9. Preferred embodiments are defined by the dependent claims.

An electromechanical apparatus according to a first aspect of the present invention includes: a motor that includes a rotation shaft and that applies to the rotation shaft a torque in a direction toward an angular position in accordance with control; a rotation sensor detecting an angular position of the rotation shaft; and a motor control unit controlling rotation of the rotation shaft by switching an angular position to which the rotation shaft rotates in accordance with an angular position detected by the rotation sensor. The motor control unit, in a case where the rotation shaft is to be stopped, after applying a torque in a direction toward an angular position of a stop position target to the rotation shaft and when the angular position detected by the rotation sensor exceeds the angular position of the stop position target by a predetermined amount, moves the angular position of the stop position target to an angular position between the angular position of the stop position target and the angular position detected by the rotation sensor.

With this configuration, by moving the stop position target stepwise in accordance with the detection results of the rotation sensors, a sound at the moment of stopping can be effectively reduced, compared with the case where a single angular position is fixed as the stop position target. Further, since feedback control is not performed, rotation from the start of a stop operation to the actual end of the stop operation can be suppressed.

Preferably, the motor control unit may control a rotation speed of the rotation shaft so that the rotation speed of the rotation shaft have a constant speed before stopping the rotation shaft.

As a result, it becomes easy to make the rotation shaft stop at a target angular position with high accuracy.

Preferably, the motor control unit may set a first stop position target after a reduction in speed of the rotation shaft.

As a result, since the rotation speed at the time of starting a stop operation is lowered, the sound at the moment of stopping is reduced and a rotation after the stop operation has been started and before the rotation shaft actually stops is suppressed.

Preferably, the rotation sensor may detect a rotation direction of the rotation shaft. The motor control unit, in a case where the rotation direction detected by the rotation sensor is a first rotation direction, after applying a torque in a direction toward the angular position of the stop position target to the rotation shaft and when the angular position detected by the rotation sensor exceeds the stop position target in the first rotation direction, may move the angular position of the stop position target to a position between the stop position target and the angular position detected by the rotation sensor. Further, the motor control unit, in a case where the rotation direction detected by the rotation sensor is a second rotation direction opposite to the first rotation direction, after applying a torque in a direction toward the angular position of the stop position target to the rotation shaft and when the angular position detected by the rotation sensor exceeds the stop position target in the second rotation direction, may move the angular position of the stop position target to a position between the stop position target and the angular position detected by the rotation sensor.

With this configuration, independent of the rotation direction, the stop position target can be moved stepwise in accordance with the detection result of the rotation sensor.

Preferably, the rotation sensor may detect the angular position of the rotation shaft in units of angular ranges with a predetermined width.

Preferably, the motor control unit, in a case where the rotation shaft is to be stopped, after applying to the rotation shaft a torque in a direction toward the angular position of the stop position target and when more than N of the angular ranges are detected in sequence in the rotation sensor, other than the angular range including the stop position target, may move the stop position target to the angular position included in the angular range that has returned by a return amount M from the angular range detected last by the rotation sensor, M being a natural number less than or equal to N.

Preferably, the electromechanical apparatus according to the first aspect of the present invention may further include an operation knob, and a moving mechanism that moves the operation knob along a predetermined path in accordance with rotation of the rotation shaft, and a transmission may be switched by the operation knob.

Preferably, the electromechanical apparatus according to the first aspect of the present invention may further include a position sensor detecting a position of the operation knob. The motor control unit may start stop control of the rotation shaft when it is detected by the position sensor that the operation knob has reached a predetermined position.

A second aspect of the present invention is a stop control method for an electromechanical apparatus including: a motor that includes a rotation shaft and that applies to the rotation shaft a torque in a direction toward an angular position in accordance with control; and a rotation sensor detecting an angular position of the rotation shaft; the method controlling rotation of the rotation shaft by switching an angular position to which the rotation shaft rotates in accordance with an angular position detected by the rotation sensor. This method includes applying, in a case where the rotation shaft is to be stopped, a torque in a direction toward an angular position of a stop position target to the rotation shaft; and moving, when the angular position detected by the rotation sensor exceeds an angular position of the stop position target by a predetermined amount, the angular position of the stop position target to an angular position between the angular position of the stop position target and the angular position detected by the rotation sensor.

With this configuration, by moving the stop position target stepwise in accordance with the detection results of the rotation sensors, the sound at the moment of stopping can be effectively reduced, compared with the case where a single angular position is fixed as the stop position target. Further, since feedback control is not performed, rotation from the start of a stop operation to the actual end of the stop operation can be suppressed.

The present invention can provide an electromechanical apparatus and a stop control method for the electromechanical apparatus that can reduce the sound at the time of stopping while rotation from the start of a stop operation to the actual end of the stop operation is suppressed.

### BRIEF DESCRIPTION OF THE DRAWINGS

Fig. 1 is a perspective view of an electromechanical apparatus according to an embodiment of the present invention;
Fig. 2 is another perspective view of the electromechanical apparatus of Fig. 1;
Fig. 3 is a sectional view of the electromechanical apparatus of Fig. 1 taken along line III-III;
Fig. 4 is a sectional view of the electromechanical apparatus of Fig. 2 taken along line IV-IV;
Fig. 5 is a conceptual diagram illustrating the arrangement of the configuration components of part of a motor;
Fig. 6 is a configuration diagram of a control system of the electromechanical apparatus of Fig. 1;
Fig. 7 is a flowchart for describing a stop control method for the electromechanical apparatus of Fig. 1;
Fig. 8 is a diagram illustrating the relationship between the angular position of a rotation shaft and a torque of the electromechanical apparatus of Fig. 1 and a change in detection phase and angle range;
Figs. 9A and 9B are graphs respectively illustrating the magnitude of a sound of a reference example and that of an example; and
Figs. 10A and 10B are graphs respectively illustrating the sharpness of the sound of the reference example and the sharpness of the sound of the example.

### DESCRIPTION OF THE PREFERRED EMBODIMENTS

### Configuration

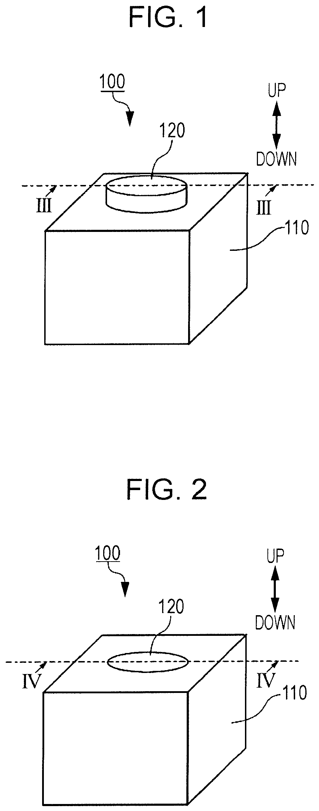

Hereinafter, an electromechanical apparatus according to an embodiment of the present invention will be described. Fig. 1 and Fig. 2 are perspective views illustrating different states of an electromechanical apparatus 100 according to the present embodiment. The electromechanical apparatus 100 is a shift apparatus mounted in a vehicle not illustrated. The up and down directions in the present embodiment are defined for the convenience of description and do not limit the actual usage directions.

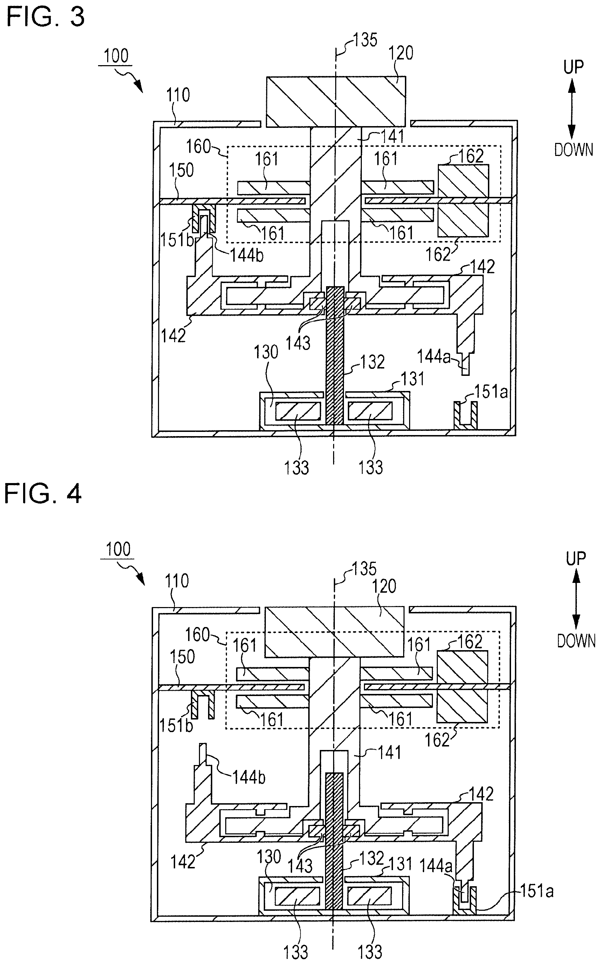

Fig. 3 is a schematic sectional view of the electromechanical apparatus 100 of Fig. 1 in a state in which an operation knob 120 is in a protruding position, when viewed in the direction of the arrows by cutting the electromechanical apparatus 100 in a plane includes line III-III and a line oriented in an up/down direction which is a movement direction of the operation knob 120. Fig. 4 is a schematic sectional view of the electromechanical apparatus 100 of Fig. 2 in which the operation knob 120 is at a housed position, when viewed in the direction of the arrows by cutting the electromechanical apparatus 100 in a plane including line IV-IV and a line oriented in the up/down direction of the operation knob 120.

As illustrated in Fig. 1, the electromechanical apparatus 100 includes a casing 110 and an operation knob 120. The configuration components of the electromechanical apparatus 100 are housed within the casing 110 except for the operation knob 120. The casing 110 may not be provided.

The operation knob 120 switches a transmission upon receipt of a turning operation performed by a user. The operation knob 120 moves between a protruding position where the operation knob 120 protrudes upward from the casing 110, illustrated in Fig. 1, and a housed position where the operation knob 120 is housed within the casing 110, illustrated in Fig. 2. For example, when an ignition switch, not illustrated, of a vehicle is turned on, the housed position in Fig. 2 changes to the protruding position in Fig. 1. When the ignition switch is turned off, the protruding position in Fig. 1 changes to the housed position in Fig. 2.

As illustrated in Fig. 3, the electromechanical apparatus 100 includes a motor 130. The motor 130 of the present embodiment is a three-phase brushless motor with four poles and six slots, but may be another brushless motor or another motor such as a stepping motor. The motor 130 includes a cover 131, a rotation shaft 132 provided in such a manner as to protrude upward from the inside of the cover 131 to the outside of the cover 131, and a stator 133 arranged around the rotation shaft 132 inside the cover 131. The cylinder-shaped curved surface of the rotation shaft 132 includes a groove formed thereon so as to function as a worm gear.

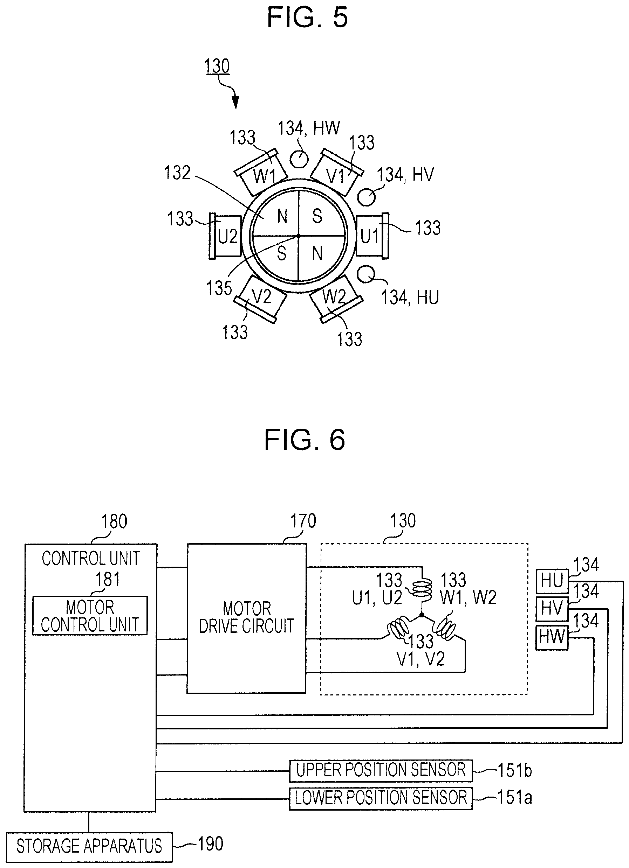

Fig. 5 is a conceptual diagram illustrating the arrangement of the configuration components of part of the motor 130 seen from the above. The rotation shaft 132 rotates about a virtual center line 135 extending in the up/down direction. The lower end of the rotation shaft 132 functions as a rotor and includes magnets arranged in such a manner that four poles N, S, N, and S are arranged at equal intervals in the rotation direction. Around this rotor, six coils (U1, V1, W1, U2, V2, W2) are arranged so as to form the stator 133 with six slots. The coil U1, the coil V1, the coil W1, the coil U2, the coil V2, and the coil W2 are arranged counterclockwise around the center line 135 in this sequence at intervals of 60 degrees.

The motor 130 is controlled by a control method which is similar to that for a general three-phase brushless motor. The rotation direction and the rotation speed are determined by a change in time of control signals applied to coils forming the stator 133.

The motor 130 applies to the rotation shaft 132 a torque in a direction toward an angular position in accordance with the control by a control unit 180 described later. At the time of stop control, a stop position target is set to one of 12 angular positions arranged for every angle corresponding to 1/12 of one rotation of the rotation shaft 132. A stop position target is determined in accordance with a difference in signal applied to the stator 133. In other words, the motor 130 is controlled such that a torque in a direction toward a set stop position target to be reached is applied to the rotation shaft 132 in accordance with the switching of an externally supplied signal.

Note that identical signals are applied to the coil U1 and the coil U2, identical signals are applied to the coil V1 and the coil V2, and identical signals are applied to the coil W1 and the coil W2. In other words, symmetric signals are applied to the stator 133 every 180 degrees around the center line 135. Further, the poles of the rotation shaft 132 are arranged such that poles of the same polarity are displaced by 180 degrees around the center line 135. Hence, setting of a stop position target at a certain angular position is the same as setting the stop position target at an angular position corresponding to a rotation of 180 degrees around the center line 135. For example, a case where a torque in a direction toward the coil V1 is applied to a first S pole is a case where the first pole S is within a range of ±90 degrees with the coil V1 as the center, and when the first pole is outside of the range of ±90 degrees with the coil V1 as the center, the first S pole receives a torque in a direction toward the coil V2. In the present specification, description is given for the case in which the rotation shaft 132 does not rotate beyond a range of ±90 degrees of the sequentially set stop position targets.

The motor 130 further includes three rotation sensors 134 arranged at intervals of 60 degrees around the center line 135. The rotation sensors 134 are magnetic sensors and, more specifically, Hall devices utilizing the Hall effect. The rotation sensors 134 detect the angular positions of the rotation shaft 132. The rotation sensor 134 (HU) is arranged between the coil W2 and the coil U1. The rotation sensor 134 (HV) is arranged between the coil U1 and the coil V1. The rotation sensor 134 (HW) is arranged between the coil V1 and the coil W1.

The rotation direction and angular position of the rotation shaft 132 are determined on the basis of the patterns of signals output from the three rotation sensors 134. The angular position corresponds to an angle through which the rotation shaft 132 has rotated. The rotation sensors 134 each detect the angular position of the rotation shaft 132 in units of angular ranges with a predetermined width. A single unit of this angular range is called a detection range.

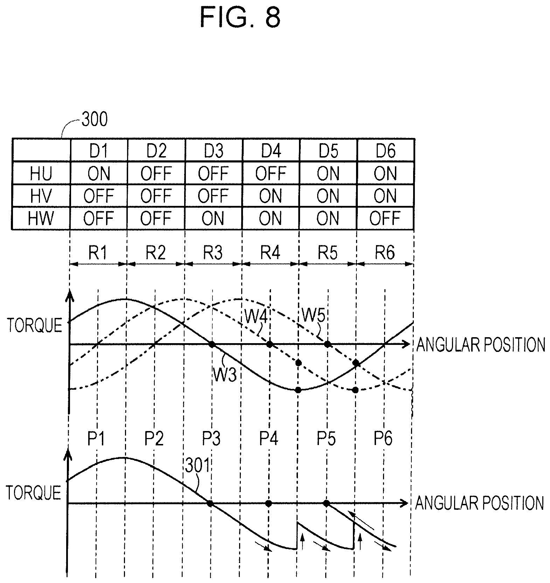

A table 300 in Fig. 8 illustrates detection signals of the rotation sensors 134 (HU to HW) in each detection phase. Further, a graph below the table 300 in Fig. 8 illustrates the relationship between angular position and torque.

Detection ranges R1 to R6 correspond to angular ranges obtained by equally dividing 180 degrees by six. The detection ranges R1 to R6 respectively include, at the centers thereof, angular positions P1 to P6 to which a stop position target can be set. Detection phases D1 to D6 represent combinations of the detection signals of the rotation sensors 134 (HU to HW) corresponding to the detection ranges R1 to R6.

In the detection phase D1, "HU" is ON, "HV" is OFF, and "HW" is OFF. In the detection phase D2, "HU" is OFF, "HV" is OFF, and "HW" is OFF. In the detection phase D3, "HU" is OFF, "HV" is OFF, and "HW" is ON. In the detection phase D4, "HU" is OFF, "HV" is ON, and "HW" is ON. In the detection phase D5, "HU" is ON, "HV" is ON, and "HW" is ON. In the detection phase D6, "HU" is ON, "HV" is ON, and "HW" is OFF.

The detection range in which the rotation shaft 132 exists can be determined in accordance with the correspondence between the combinations of the detection phases D1 to D6 of the rotation sensors 134 (HU to HW) and the detection phases D1 to D6. When the rotation shaft 132 is rotating in a first rotation direction, the detection phase changes in the sequence of "D1", "D2", "D3"·····. After the detection phase D6, the detection phase returns to the detection phase D1. When the rotation shaft 132 is rotating in a second rotation direction opposite to the first rotation direction, the detection phase changes in the sequence of "D6", "D5", "D4"····. After the detection phase D1, the detection phase returns to the detection phase D6.

When the stop position target is set to the angular position P3, a torque having a torque waveform W3 is applied to the rotation shaft 132. When the stop position target is set to the angular position P4, a torque having a torque waveform W4 is applied to the rotation shaft 132. When the stop position target is set to the angular position P5, a torque having a torque waveform W5 is applied to the rotation shaft 132. In other words, the torque waveform having approximately the same shape shifts in accordance with the set stop position target among the angular positions P1 to P6. The torque waveform is close to a sine wave with a period of 180 degrees, and becomes zero at an angular position set as a stop position target. When the rotation shaft 132 proceeds from the stop position target in the first rotation direction, a torque in the second rotation direction is applied to the rotation shaft 132 near the stop position target. When the rotation shaft 132 proceeds from the stop position target in the second rotation direction, a torque in the first rotation direction is applied to the rotation shaft 132 near the stop position target.

Note that the number of stop position targets, the number and width of detection ranges, and the waveform of a torque wave may be made to be different from those in the present embodiment, as another embodiment. For example, the number of the stop position targets may be made to be larger or smaller than six by changing the configuration of the motor 130.

As illustrated in Fig. 3, the electromechanical apparatus 100 further includes an up and down shaft 141, an up and down platform 142, a driven gear piece 143. The up and down shaft 141 is integrally connected to the operation knob 120, and rotates integrally with the operation knob 120 about the center line 135. The up and down platform 142 rotatably supports the up and down shaft 141. The up and down platform 142 is movable in the up/down direction, but is restricted by a component not illustrated, so as not to be allowed to rotate about the center line 135. The driven gear piece 143 is fixed to the up and down platform 142 and is arranged around the rotation shaft 132. The driven gear piece 143 includes a gear groove, on the face thereof facing the rotation shaft 132, that meshes with the worm gear of the rotation shaft 132.

When the rotation shaft 132 rotates, the driven gear piece 143 moves up and down without rotating. In accordance with the rotation of the rotation shaft 132, the driven gear piece 143, the up and down platform 142, the up and down shaft 141, and the operation knob 120 integrally moves up and down. The driven gear piece 143 and the up and down platform 142 do not rotate about the center line 135, but the operation knob 120 and the up and down shaft 141 are rotatable about the center line 135 in both ways. The operation knob 120 and the up and down shaft 141 can be made to rotate irrespectively of the rotation of the rotation shaft 132. The worm gear of the rotation shaft 132 and the driven gear piece 143 function as a movement mechanism for moving the operation knob 120 along a predetermined path in accordance with the rotation of the rotation shaft 132. The predetermined path is a line parallel to the center line 135.

The up and down platform 142 includes two light-shielding pieces, i.e., a lower light-shielding piece 144a and an upper light-shielding piece 144b (hereinafter, simply called light-shielding pieces 144 without distinction in some cases). The lower light-shielding piece 144a is provided so as to protrude downward from a portion of the up and down platform 142, and the upper light-shielding piece 144b is provided so as to protrude upward from a portion of the up and down platform 142. The amounts of movement of the light-shielding pieces 144 in the up or down direction are the same as the amount of movement of the operation knob 120.

The electromechanical apparatus 100 further includes a circuit substrate 150. The circuit substrate 150 is arranged in such a manner as to divide the space within the casing 110 into upper and lower portions. The circuit substrate 150 is arranged between the operation knob 120 and the up and down platform 142, and the up and down shaft 141 is arranged in such a manner as to extend through the circuit substrate 150 without being in contact with the circuit substrate 150.

The electromechanical apparatus 100 further includes a lower position sensor 151a and an upper position sensor 151b (hereinafter, called position sensors 151 without distinction in some cases). The position sensors 151 are photo sensors that indirectly detect the position of the operation knob 120 by detecting the positions of the light-shielding pieces 144. The lower position sensor 151a is arranged on the bottom surface within the casing 110 and detects the position of the lower light-shielding piece 144a. The upper position sensor 151b is arranged on the lower surface of the circuit substrate 150 and detects the position of the upper light-shielding piece 144b.

The position sensors 151 each delimit an internal space having an opening on either the upward or downward side. The position sensors 151 each detect whether or not an object exists in the corresponding internal space by using light. The position sensors 151 are turned on when the light-shielding pieces 144 exist in the respective internal spaces and are turned off when the light-shielding pieces 144 do not exist in the respective internal spaces. In the up/down direction, the amount of movement of the light-shielding pieces 144 is the same as the amount of movement of the operation knob 120. The position sensors 151 indirectly detect the position of the operation knob 120 through the light-shielding pieces 144. The operation knob 120 moves up and down between the housed position where the light-shielding piece 144 turns on the lower position sensor 151a and the protruding position where the light-shielding piece 144 turns on the upper position sensor 151b.

The electromechanical apparatus 100 further includes an operation detection unit 160 mounted on the circuit substrate 150. The operation detection unit 160 includes two rotation tables 161 arranged on two sides of the circuit substrate 150, and operation amount sensors 162 of the rotation tables 161. The up and down shaft 141 is arranged in such a manner as to extend through the rotation tables 161. The cylindrical side surface of the up and down shaft 141 includes a groove extending in the up/down direction formed thereon, and the engaging pieces of the rotation tables 161 are engaged in the groove of the up and down shaft 141. The rotation tables 161 are bound to the circuit substrate 150 by a configuration component (not illustrated) in such a manner as not to move up and down while being rotatable about the center line 135.

When the up and down shaft 141 moves up and down, the engagement pieces of the rotation tables 161 slide in the groove of the up and down shaft 141 and, hence, the rotation tables 161 do not move up and down. When the up and down shaft 141 rotates about the center line 135, the engagement pieces of the rotation tables 161 are pressed against the groove of the up and down shaft 141 and, hence, the rotation tables 161 rotate together with the up and down shaft 141. The amount of rotation of the rotation tables 161 is detected by the operation amount sensors 162 formed of magnetic sensors. In other words, the rotation operation of the operation knob 120 is detected by the operation amount sensors 162 through the up and down shaft 141 and the rotation tables 161. Note that the detection means for the rotation operation of the operation knob 120 is not limited to this.

### Control system

Fig. 6 is a configuration diagram of a control system regarding control of the up and down movement in the electromechanical apparatus 100. The electromechanical apparatus 100 includes a motor drive circuit 170, the control unit 180, and a storage apparatus 190 illustrated in Fig. 6, mounted on the circuit substrate 150 illustrated in Fig. 3.

The motor drive circuit 170 controls the motor 130 on the basis of instructions given by the control unit 180, thereby making the rotation shaft 132 (Fig. 3) rotate in a desired direction at a desired speed, and making the rotation shaft 132 (Fig. 3) stop.

The control unit 180 is a central processing unit. The storage apparatus 190 is, for example, a random access memory (RAM). The storage apparatus 190 may be another apparatus that can store information.

The control unit 180 performs various types of control of the electromechanical apparatus 100 by reading and executing programs stored in the storage apparatus 190. The control unit 180 may be formed of another configuration component or may be an application specific integrated circuit (ASIC).

The control unit 180 is connected to the motor drive circuit 170, the lower position sensor 151a, the upper position sensor 151b, the rotation sensor 134 (HU), the rotation sensor 134 (HV), and the rotation sensor 134 (HW).

The control unit 180 functions as a motor control unit 181 by reading a program stored in the storage apparatus 190 and executing the program.

In the case where the rotation shaft 132 is made to stop, the motor control unit 181, after applying a torque in a direction toward the angular position of a stop position target to the rotation shaft 132 and when the angular position detected by the rotation sensors 134 exceeds the angular position of the stop position target by a predetermined amount, moves the angular position of the stop position target to an angular position between the angular position of the stop position target and the angular position detected by the rotation sensors 134.

In the case where the rotation direction detected by the rotation sensors 134 is the first rotation direction, after a torque in a direction toward the angular position of the stop position target is applied to the rotation shaft 132 and when the angular position detected by the rotation sensors 134 exceeds the stop position target by a predetermined amount in the first rotation direction, the motor control unit 181 moves the angular position of the stop position target to an angular position between the stop position target and the angular position detected by the rotation sensors 134. In the case where the rotation direction detected by the rotation sensors 134 is the second rotation direction opposite to the first rotation direction, after a torque in a direction toward the angular position of the stop position target is applied to the rotation shaft 132 and when the angular position detected by the rotation sensors 134 exceeds the stop position target by a predetermined amount in the second rotation direction, the motor control unit 181 moves the angular position of the stop position target to an angular position between the stop position target and the angular position detected by the rotation sensors 134.

In the case where the rotation shaft 132 is to be stopped, after a torque in a direction toward the angular position of the stop position target is applied to the rotation shaft 132 and when more than N angular ranges, other than an angular range including the stop position target, are detected by the rotation sensors 134 in sequence, the motor control unit 181 moves the stop position target to an angular position included in an angular range that has returned by a return amount M (M represents a natural number equal to or less than N) from the angular range detected last by the rotation sensors 134.

The motor control unit 181, before stopping the rotation shaft 132, performs control such that the rotation speed of the rotation shaft 132 is kept at a constant speed. By realizing a constant speed, the rotation shaft 132 can be made to stop at a target angular position with high accuracy. The motor control unit 181 sets the first stop position target after reducing the speed of the rotation shaft 132.

### First stop control method

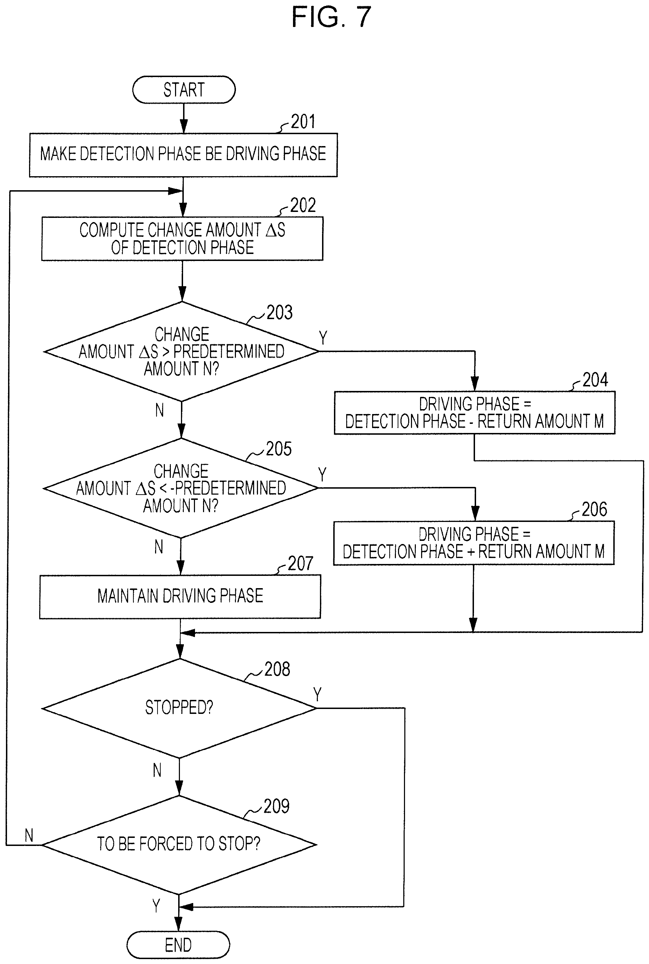

Next, referring to a flow in Fig. 7, the stop control method will be described. In the present stop control method, the rotation shaft 132 of the motor 130 is stopped while the stop position target is shifted stepwise.

This stop control method is applied to a case in which the motor control unit 181, during a process of moving the operation knob 120 located in the housed position illustrated in Fig. 4 to the protruding position illustrated in Fig. 3, makes the operation knob 120 stop near the protruding position of Fig. 3. On the contrary, the stop control method may be applied to a case in which the motor control unit 181, during a process of moving the operation knob 120 located in the protruding position illustrated in Fig. 3 to the housed position illustrated in Fig. 4, makes the operation knob 120 stop near the housed position illustrated in Fig. 4. The stop control method may be applied to another stop operation.

In the description below, one of the detection phases is set appropriately as a driving phase. Setting of one of the detection phases as a driving phase includes setting of a stop position target. In other words, for a detection phase set as a driving phase, there is a corresponding detection range, as illustrated in Fig. 8. Each detection range includes an angular position (hereinafter called a stop position target candidate) that can be set as a stop position target. A stop position target candidate included in a detection range corresponding to a driving phase is set as the stop position target. Setting of the stop position target is performed by switching of a control signal supplied to the motor 130.

In step 201, the motor control unit 181 sets the current detection phase detected by the rotation sensors 134 as a driving phase and sets the stop position target candidate corresponding to the driving phase as a stop position target. For example, when the present detection phase is D3 in Fig. 8, the motor control unit 181 sets D3 as the driving phase and sets the angular position candidate P3 as the stop position target.

Next, in step 202, the motor control unit 181 computes a change amount ΔS of the detection phase. In other words, the motor control unit 181 computes the number of detection phases at which the rotation shaft 132 has been detected other than the detection phase set as the driving phase. For example, when the driving phase is "D3" in Fig. 8 and the present detection phase is "D5", the change amount ΔS is "2". When the driving phase is "D5" and the present detection phase is "D3", the change amount ΔS is "-2".

In the example of Fig. 8, when the detection phase changes in a direction from "D1" to "D6", the change amount ΔS increases "1" by "1", and when the detection phase changes in a direction from "D6" to "D1", the change amount ΔS decreases "1" by "1". Note that when the rotation shaft 132 is rotating in the first rotation direction, the change amount ΔS proceeds from "D6" to "D1", and when the rotation shaft 132 is rotating in the second rotation direction, the change amount ΔS proceeds from "D1" to "D6" again. In other words, the difference in change amount between "D6" and "D1" is "1". Hereinafter, the detection phase is similarly thought to be circulating.

Next, in step 203, the motor control unit 181 proceeds to step 204 when the change amount ΔS of the detection phase is larger than a predetermined amount N, and proceeds to step 205 when the change amount ΔS is the predetermined amount N or less. The predetermined amount N is stored in the storage apparatus 190 in advance. For example, when the predetermined amount N is "1" and the change amount ΔS is "2", the motor control unit 181 proceeds to step 204, and when the predetermined amount N is "1" and the change amount ΔS is "0" or "1", the motor control unit 181 proceeds to step 205.

In step 204, the motor control unit 181 sets the detection phase that has returned, by a return amount M, from the detection phase detected last in step 202 as a driving phase, and sets a candidate stop position target corresponding to the driving phase as a stop target. Then the motor control unit 181 proceeds to step 208. The returning direction is opposite to the rotation direction of the rotation shaft 132. The return amount M is stored in the storage apparatus 190 in advance. For example, when the detection phase detected last in step 202 is "D5" in Fig. 8 and the return amount M is "1", the motor control unit 181 sets the candidate stop position target P4 as the stop position target, making the detection phase "D4", which has returned from "D5" by a single detection phase, be a driving phase.

In step 205, the motor control unit 181 proceeds to step 206 when the change amount ΔS of the detection phase is smaller than "-N", which is the predetermined amount N multiplied by "-1". When the change amount ΔS is "-N" or higher, the motor control unit 181 proceeds to step 207. For example, the motor control unit 181 proceeds to step 206 when the value "-N", which is the predetermined amount N multiplied by "-1", is "-1" and the change amount ΔS is "-2", and proceeds to step 207 when "-N" is "-1" and the change amount ΔS is "0" or "-1".

In step 206, the motor control unit 181, by making the detection phase that has returned by the return amount M from the detection phase detected last in step S202 be a driving phase, sets the stop position target corresponding to the driving phase candidate as a stop position target and proceeds to step S208. The returning direction is opposite to the rotation direction of the rotation shaft 132. For example, when the driving phase is "D5" in Fig. 8, the detection phase detected last in step 202 is "D3", and the return amount M is "1", the motor control unit 181 sets the stop position target to the angular position P4 by making "D4", which has returned from D3 by a single detection phase, be a driving phase.

Note that the step 204 and the step 206 mean that after a torque in a direction toward the angular position of the stop position target is applied to the rotation shaft 132, when the angular position detected by the rotation sensors 134 exceeds the angular position of the stop position target by a predetermined amount, the angular position of the stop position target is moved to a position between the angular position of the stop position target and the angular position detected by the rotation sensors 134. Step 204 is applied in the case where the rotation shaft 132 is rotating in the first rotation direction. Step 206 is applied in the case where the rotation shaft 132 is rotating in the second rotation direction. The predetermined amount N and the return amount M in step 203 and step 204 may be respectively different from the predetermined amount N and the return amount M in step 205 and step 206.

In step 207, the motor control unit 181 maintains the driving phase, maintains the setting of the stop position target, and proceeds to step S208. Step 207 corresponds to the case in which the rotation shaft 132 does not move considerably and exists near the stop position target.

In step 208, the motor control unit 181 determines whether or not the rotation shaft 132 has stopped. When the rotation shaft 132 has stopped, the stop control processing ends, and when the rotation shaft 132 has not been stopped, the flow proceeds to step 209. For example, the motor control unit 181 determines that the rotation shaft 132 has stopped when the detection phase continues to be maintained for a certain period.

In step 209, the motor control unit 181 determines whether or not the rotation shaft 132 be forced to stop in view of a predetermined condition. When it is determined that the rotation shaft 132 should be forced to stop, the motor control unit 181 forces the rotation shaft 132 to be stopped and the processing ends. When it is determined that the motor control unit 181 should not be forced to stop, the flow goes back to step 202. Forcing the rotation shaft 132 to be stopped may be ending the stop control method while leaving the stop position target fixed.

### Example

For example, a torque waveform 301 in Fig. 8 illustrates an illustrative change in torque applied to the rotation shaft 132 in the case where the return amount M is 1. In the present example, at first, the rotation shaft 132 is rotating in the first rotation direction, which is a direction from "D1" toward "D6".

In step 201, the detection phase D3 is set as a driving phase, and the stop position target is set to "P3". The rotation shaft 132 reaches the detection range R5 while slowing down due to receipt of a torque in a direction toward P3 along the torque waveform W3. The detection phase detected last in step 202 is D5, and the change amount ΔS is "2". In step 203, it is determined that the change amount ΔS is larger than the predetermined amount N and the flow proceeds to step 204. In step 204, D4, which is a phase that has returned from D5 by "1", is set as a driving phase, and the stop position target is set to "P4".

The rotation shaft 132 reaches the detection range R6 while slowing down due to receipt of a torque in a direction toward "P4" along the torque waveform W4. The detection phase detected last in step 202 becomes "D6", and the change amount ΔS becomes "2". In step 203, it is determined that the change amount ΔS is larger than the predetermined amount N, and the flow proceeds to step 204. In step 204, after returning from "D6" by "1", "D5" is set as a driving phase, and the stop position target is set to "P5".

The rotation shaft 132, while slowing down due to receipt of a torque in a direction toward "P5" along the torque waveform W5, rotates in the detection range R6, but starts to rotate in the opposite second rotation direction before reaching "Rl". Since the difference between the driving phase and the detected detection phase is small, the driving phase is continuously maintained in step 207. After a predetermined period has passed, it is determined in step 208 that the rotation shaft 132 has stopped, and the stop control method ends. The rotation shaft 132 stops at "P5", which is a stop target.

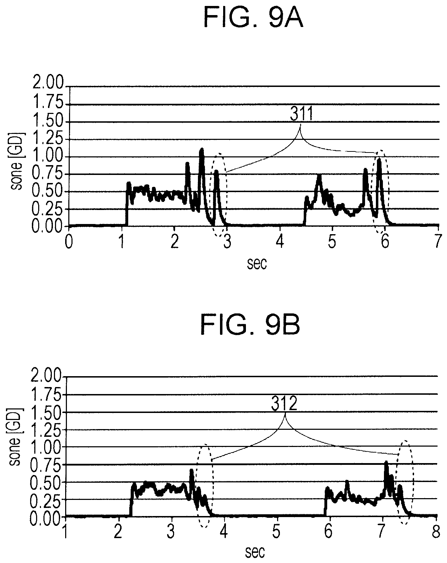

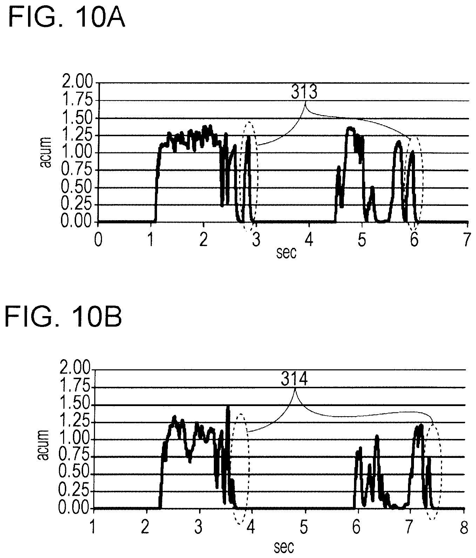

Figs. 9A and 9B are graphs each illustrating the magnitude of a sound generated when the rotation shaft of the electromechanical apparatus is stopped. Fig. 9A illustrates the case of a reference example in which a stop position target is fixed without using the stop control method of the present embodiment. Fig. 9B illustrates the case of an example in which the stop control method of the present embodiment is used. Figs. 10A and 10B are graphs each illustrating the sharpness of a sound generated when the rotation shaft of the electromechanical apparatus is stopped. Fig. 10A illustrates the case of the reference example in which a stop position target is fixed without using the stop control method of the present embodiment. Fig. 10B illustrates the case of the example in which the stop control method of the present embodiment is used.

When the stop position target is fixed at a single angular position as in the reference example, the rotation shaft 132 rushes to a stop position target, after rotating to a position spaced apart from the stop position target. As illustrated by the waveforms within regions 311 of Fig. 9A and regions 313 of Fig. 10A, large peaks were generated at the time of stopping in the reference example. These peaks are perceived by a person as noise. The noise is generated by members inside or outside the electromechanical apparatus when the rotation shaft stops.

As in the example using the stop control method according to the present embodiment, in the case where the stop position target is shifted stepwise in the rotation direction, the stop position target becomes near the present angular position when the rotation shaft 132 is considerably spaced apart from the stop position target and, hence, a torque applied to the rotation shaft 132 is reduced. In the present embodiment, since such a reduction in torque is made stepwise, there is no case in which the rotation shaft 132 quickly reaches the stop position. As illustrated by the waveforms within the regions 312 of Fig. 9B and the regions 314 of Fig. 10B, a large peak is not generated at the time of stopping in the example and, hence, noise is suppressed compared with the reference example.

According to the electromechanical apparatus 100 of the present embodiment, by moving the stop position target stepwise in accordance with the detection results of the rotation sensors 134, a sound at the moment of stopping can be effectively reduced, compared with the case in which a single angular position is fixed as the stop position target. Further, since feedback control is not performed as in the existing methods, rotation from the start of a stop operation to the actual end of the stop operation can be suppressed.

According to the electromechanical apparatus 100 of the present embodiment, the rotation speed of a rotation shaft is controlled so as to become a constant speed before the rotation shaft is stopped and, hence, the rotation shaft can be stopped at a target angular position with high accuracy.

The present invention is not limited to the embodiments described above. In other words, within the technical scope of the present invention and the equivalent scope thereof, those skilled in the art may realize various modifications, combinations, sub-combinations, and alternatives regarding the configuration components of the embodiments described above.

The present invention can be applied to various electromechanical apparatuses that move various members by using the rotation of the rotation shaft of a motor. For example, the present invention can be applied to shift apparatuses mounted in various vehicles, aircrafts, ships, and others.

## Claims

1. An electromechanical apparatus (100) comprising:
a motor (130) that includes a rotation shaft (132) and that applies to the rotation shaft (132) a torque in a direction toward an angular position of a stop position target (P3) in accordance with control;
a rotation sensor (134) detecting an angular position of the rotation shaft (132); and
a motor control unit (181) controlling rotation of the rotation shaft (132) of the motor (130) in accordance with the angular position detected by the rotation sensor,
wherein the motor control unit (181), in a case where the rotation shaft (132) is to be stopped, applies a torque in a direction toward the angular position of the stop position target to the rotation shaft (132), **characterised in that** when the angular position (P5) detected by the rotation sensor exceeds the angular position of the stop position target (P3) by a predetermined amount, the motor control unit (181) moves the angular position of the stop position target (P3) to an angular position (P4) between the angular position of the stop position target (P3) and the angular positior (P5) detected by the rotation sensor,
wherein the stop position target is shifted stepwise in the rotation direction.

2. The electromechanical apparatus (100) according to Claim 1, wherein the motor control unit (181) controls a rotation speed of the rotation shaft (132) so that the rotation speed of the rotation shaft (132) have a constant speed before stopping the rotation shaft (132).

3. The electromechanical apparatus (100) according to Claim 1 or Claim 2, wherein the motor control unit (181) sets a first stop position target after a reduction in speed of the rotation shaft (132).

4. The electromechanical apparatus (100) according to any one of Claim 1 to Claim 3,
wherein the rotation sensor detects a rotation direction of the rotation shaft (132),
wherein the motor control unit (181), in a case where the rotation direction detected by the rotation sensor is a first rotation direction, after applying a torque in a direction toward the angular position of the stop position target to the rotation shaft (132) and when the angular position detected by the rotation sensor exceeds the stop position target in the first rotation direction by a predetermined amount, moves the angular position of the stop position target to a position between the stop position target and the angular position detected by the rotation sensor,
wherein the motor control unit (181), in a case where the rotation direction detected by the rotation sensor is a second rotation direction opposite to the first rotation direction, after applying a torque in a direction toward the angular position of the stop position target to the rotation shaft (132) and when the angular position detected by the rotation sensor exceeds the stop position target in the second rotation direction by a predetermined amount, moves the angular position of the stop position target to a position between the stop position target and the angular position detected by the rotation sensor.

5. The electromechanical apparatus (100) according to any one of Claim 1 to Claim 4,
wherein the rotation sensor detects the angular position of the rotation shaft (132) in units of angular ranges with a predetermined width, wherein each angular detection range includes an angular position (stop position target candidate) set as stop position target.

6. The electromechanical apparatus (100) according Claim 5, wherein the motor control unit (181), in a case where the rotation shaft (132) is to be stopped, after applying to the rotation shaft (132) a torque in a direction toward the angular position of the stop position target and when more than N of the angular ranges are detected in sequence in the rotation sensor, other than the angular range including the stop position target, moves the stop position target to the angular position included in the angular range that has returned by a return amount M from the angular range detected last by the rotation sensor, M being 2, N being1, wherein when an angular range that is ahead of, by two, an old angular range including the stop position is detected, a new angular position of the stop position target is set between the old angular range including the stop position and the detected angular range.

7. The electromechanical apparatus (100) according to one of Claim 1 to Claim 6, further comprising:
an operation knob (120), and
a moving mechanism (143) that moves the operation knob along a predetermined path, in accordance with rotation of the rotation shaft (132),
wherein the operation knob switches a transmission.

8. The electromechanical apparatus (100) according to Claim 7, further comprising:
a position sensor (151) detecting a position of the operation knob,
wherein the motor control unit (181) starts stop control of the rotation shaft (132) when it is detected by the position sensor that the operation knob has reached a predetermined position.

9. A stop control method for an electromechanical apparatus (100) including: a motor (130) that includes a rotation shaft (132) and that applies to the rotation shaft (132) a torque in a direction toward an angular position of a stop position target (P3) in accordance with control; a rotation sensor (134) detecting an angular position of the rotation shaft (132); and a motor control unit (181) controlling rotation of the rotation shaft (132) of the motor (130) in accordance with the angular position detected by the rotation sensor,
the stop control method comprising:
applying, in a case where the rotation shaft (132) is to be stopped, a torque in a direction toward the angular position of the stop position target (P3) to the rotation shaft (132);
**characterised by**
moving, when the angular position (P5) detected by the rotation sensor exceeds the angular position of the stop position target (P3) by a predetermined amount, the angular position of the stop position target (P3) to an angular position (P4) between the angular position of the stop position target (P3) and the angular position (P5) detected by the rotation sensor, wherein the stop position target is shifted stepwise in the rotation direction.

## Patentansprüche

1. Elektromechanische Vorrichtung (100), aufweisend:
einen Motor (130), der eine Rotationswelle (132) aufweist und der auf die Rotationswelle (132) ein Drehmoment in Richtung einer Winkelposition eines Stopppositionsziels (P3) in Abhängigkeit von einer Steuerung aufbringt;
einen Rotationssensor (134), der eine Winkelposition der Rotationswelle (132) erfasst; und
eine Motorsteuereinheit (181), die Rotation der Rotationswelle (132) des Motors (130) in Abhängigkeit von der von dem Rotationssensor erfassten Winkelposition steuert,
wobei die Motorsteuereinheit (181) in einem Fall, in dem die Rotationswelle (132) gestoppt werden soll, Drehmoment in Richtung der Winkelposition des Stopppositionsziels auf die Rotationswelle (132) aufbringt,
**dadurch gekennzeichnet,**
**dass** dann, wenn die von dem Rotationssensor erfasste Winkelposition (P5) die Winkelposition des Stopppositionsziels (P3) um einen vorbestimmten Betrag überschreitet, die Motorsteuereinheit (181) die Winkelposition des Stopppositionsziels (P3) in eine Winkelposition (P4) zwischen der Winkelposition des Stopppositionsziels (P3) und der von dem Rotationssensor erfassten Winkelposition (P5) bewegt,
wobei das Stopppositionsziel in der Rotationsrichtung stufenweise verschoben wird.

2. Elektromechanische Vorrichtung (100) nach Anspruch 1,
wobei die Motorsteuereinheit (181) eine Drehzahl der Rotationswelle (132) derart steuert, dass die Drehzahl der Rotationswelle (132) eine konstante Drehzahl aufweist, bevor die Rotationswelle (132) gestoppt wird.

3. Elektromechanische Vorrichtung (100) nach Anspruch 1 oder Anspruch 2,
wobei die Motorsteuereinheit (181) ein erstes Stopppositionsziel nach einer Drehzahlreduzierung der Rotationswelle (132) vorgibt.

4. Elektromechanische Vorrichtung (100) nach einem der Ansprüche 1 bis 3, wobei der Rotationssensor eine Rotationsrichtung der Rotationswelle (132) erfasst,
wobei die Motorsteuereinheit (181) in einem Fall, in dem die von dem Rotationssensor erfasste Rotationsrichtung eine erste Rotationsrichtung ist, nach dem Aufbringen eines Drehmoments auf die Rotationswelle (132) in Richtung der Winkelposition des Stopppositionsziels und dann, wenn die von dem Rotationssensor erfasste Winkelposition das Stopppositionsziel in der ersten Rotationsrichtung um einen vorbestimmten Betrag überschreitet, die Winkelposition des Stopppositionsziels in eine Position zwischen dem Stopppositionsziel und der von dem Rotationssensor erfassten Winkelposition bewegt,
wobei die Motorsteuereinheit (181) in einem Fall, in dem die von dem Rotationssensor erfasste Rotationsrichtung eine zweite Rotationsrichtung entgegengesetzt zu der ersten Rotationsrichtung ist, nach Aufbringen eines Drehmoments auf die Rotationswelle (132) in Richtung der Winkelposition des Stopppositionsziels und dann, wenn die von dem Rotationssensor erfasste Winkelposition das Stopppositionsziel in der zweiten Rotationsrichtung um einen vorbestimmten Betrag überschreitet, die Winkelposition des Stopppositionsziels in eine Position zwischen dem Stopppositionsziel und der von dem Rotationssensor erfassten Winkelposition bewegt.

5. Elektromechanische Vorrichtung (100) nach einem der Ansprüche 1 bis 4,
wobei der Rotationssensor die Winkelposition der Rotationswelle (132) in Einheiten von Winkelbereichen mit einer vorbestimmten Breite erfasst, wobei jeder winkelmäßige Erfassungsbereich eine als Stopppositionsziel vorgegebene Winkelposition (Stoppposition-Zielkandidaten) beinhaltet.

6. Elektromechanische Vorrichtung (100) nach Anspruch 5,
wobei die Motorsteuereinheit (181) in einem Fall, in dem die Rotationswelle (132) gestoppt werden soll, nach dem Aufbringen eines Drehmoments auf die Rotationswelle (132) in Richtung der Winkelposition des Stopppositionsziels und wenn mehr als N von den Winkelbereichen nacheinander an dem Rotationssensor erfasst werden, bei denen es sich um andere Winkelbereiche als den das Stopppositionsziel enthaltenden Winkelbereich handelt, das Stopppositionsziel in die Winkelposition bewegt, die in dem Winkelbereich enthalten ist, der mit einem Rückkehrbetrag M von dem Winkelbereich zurückgekehrt ist, der zuletzt von dem Rotationssensor erfasst wird, wobei M 2 beträgt und N 1 beträgt,
wobei dann, wenn ein Winkelbereich erfasst wird, der um zwei vor einem alten Winkelbereich liegt, der die Stoppposition beinhaltet, eine neue Winkelposition des Stopppositionsziels zwischen dem die Stoppposition enthaltenden alten Winkelbereich und dem erfassten Winkelbereich vorgegeben wird.

7. Elektromechanische Vorrichtung (100) nach einem der Ansprüche 1 bis 6, die weiterhin aufweist:
einen Betätigungsknopf (120) und
einen Bewegungsmechanismus (143), der den Betätigungsknopf in Abhängigkeit von der Rotation der Rotationswelle (132) entlang einer vorbestimmten Bahn bewegt,
wobei der Betätigungsknopf ein Getriebe schaltet.

8. Elektromechanische Vorrichtung (100) nach Anspruch 7,
die weiterhin aufweist:
einen Positionssensor (151), der eine Position des Betätigungsknopfes erfasst,
wobei die Motorsteuereinheit (181) die Stoppsteuerung der Rotationswelle (132) startet, wenn von dem Positionssensor erfasst wird, dass der Betätigungsknopf eine vorbestimmte Position erreicht hat.

9. Stopp-Steuerverfahren für eine elektromechanische Vorrichtung (100), die Folgendes aufweist: einen Motor (130), der eine Rotationswelle (132) beinhaltet und der auf die Rotationswelle (132) ein Drehmoment in Richtung einer Winkelposition eines Stopppositionsziels (P3) in Abhängigkeit von einer Steuerung aufbringt; einen Rotationssensor (134), der eine Winkelposition der Rotationswelle (132) erfasst; und eine Motorsteuereinheit (181), die Rotation der Rotationswelle (132) des Motors (130) in Abhängigkeit von der von dem Rotationssensor erfassten Winkelposition steuert,
wobei das Stopp-Steuerverfahren folgende Schritte aufweist:
in einem Fall, in dem die Rotationswelle (132) gestoppt werden soll, Aufbringen eines Drehmoments auf die Rotationswelle (132) in Richtung der Winkelposition des Stopppositionsziels (P3);
**gekennzeichnet durch**,
wenn die von dem Rotationssensor erfasste Winkelposition (P5) die Winkelposition des Stopppositionsziels (P3) um einen vorbestimmten Betrag überschreitet, Bewegen der Winkelposition des Stopppositionsziels (P3) in eine Winkelposition (P4) zwischen der Winkelposition des Stopppositionsziels (P3) und der von dem Rotationssensor erfassten Winkelposition (P5),
wobei das Stopppositionsziel in der Rotationsrichtung stufenweise verschoben wird.

## Revendications

1. Appareil électromécanique (100) qui comprend :
un moteur (130) qui englobe un arbre rotatif (132) et qui applique à l'arbre rotatif (132) un couple dans une direction orientée vers une position angulaire d'une position d'arrêt cible (P3) en conformité avec une commande ;
un capteur de rotation (134) qui détecte une position angulaire de l'arbre rotatif (132) ; et
une unité de commande de moteur (181) qui commande la rotation de l'arbre rotatif (132) du moteur (130) en conformité avec à la position angulaire qui a été détectée par le capteur de rotation ;
dans lequel l'unité de commande de moteur (181), dans un cas dans lequel l'arbre rotatif (132) doit être arrêté, applique un couple, dans une direction orientée vers la position angulaire de la position d'arrêt cible, à l'arbre rotatif (132) ;
**caractérisé en ce que**, lorsque la position angulaire (P5) qui a été détectée par le capteur de rotation dépasse la position angulaire de la position d'arrêt cible (P3) à concurrence d'une quantité prédéterminée, l'unité de commande de moteur (181) déplace la position angulaire de la position d'arrêt cible (P3) dans la direction d'une position angulaire (P4) qui est située entre la position angulaire de la position d'arrêt cible (P3) et la position angulaire (P5) qui a été détectée par le capteur de rotation ;
dans lequel la position d'arrêt cible est soumise à un décalage en pas à pas dans la direction de rotation.

2. Appareil électromécanique (100) selon la revendication 1, dans lequel l'unité de commande de moteur (181) règle une vitesse de rotation de l'arbre rotatif (132) d'une manière telle que la vitesse de rotation de l'arbre rotatif (132) possède une vitesse constante avant la mise à l'arrêt de l'arbre rotatif (132).

3. Appareil électromécanique (100) selon la revendication 1 ou 2, dans lequel l'unité de commande de moteur (181) détermine une première position d'arrêt cible après une réduction de la vitesse de l'arbre rotatif (132).

4. Appareil électromécanique (100) selon l'une quelconque des revendications 1 à 3,
dans lequel le capteur de rotation détecte une direction de rotation de l'arbre rotatif (132) ;
dans lequel l'unité de commande de moteur (181), dans un cas dans lequel la direction de rotation qui a été détectée par le capteur de rotation représente une première direction de rotation, après l'application d'un couple, dans une direction orientée vers la position angulaire de la position d'arrêt cible à l'arbre rotatif (132), et lorsque la position angulaire qui a été détectée par le capteur de rotation dépasse la position d'arrêt cible dans la première direction de rotation à concurrence d'une quantité prédéterminée, déplace la position angulaire de la position d'arrêt cible dans la direction d'une position qui est située entre la position d'arrêt cible et la position angulaire qui a été détectée par le capteur de rotation ;
dans lequel l'unité de commande de moteur (181), dans un cas dans lequel la direction de rotation qui a été détectée par le capteur de rotation représente une deuxième direction de rotation à l'opposé de la première direction de rotation, après l'application d'un couple, dans une direction orientée vers la position angulaire de la position d'arrêt cible, à l'arbre rotatif (132) et lorsque la position angulaire qui a été détectée par le capteur de rotation dépasse la position d'arrêt cible dans la deuxième direction de rotation à concurrence d'une quantité prédéterminée, déplace la position angulaire de la position d'arrêt cible dans la direction d'une position qui est située entre la position d'arrêt cible et la position angulaire qui a été détectée par le capteur de rotation.

5. Appareil électromécanique (100) selon l'une quelconque des revendications 1 à 4,
dans lequel le capteur de rotation détecte la position angulaire de l'arbre rotatif (132) en unités de plages angulaires possédant une largeur prédéterminée ; dans lequel chaque plage de détection angulaire englobe une position angulaire (position d'arrêt cible faisant office de candidat) qui est déterminée comme étant la position d'arrêt cible.

6. Appareil électromécanique (100) selon la revendication 5, dans lequel l'unité de commande de moteur (181), dans un cas dans lequel l'arbre rotatif (132) doit être arrêté, après l'application à l'arbre rotatif (132) d'un couple dans une direction orientée vers la position angulaire de la position d'arrêt cible, et lorsque plus de N plages angulaires parmi les plages angulaires sont détectées de manière successive dans le capteur de rotation, en dehors de la plage angulaire qui englobe la position d'arrêt cible, déplace la position d'arrêt cible dans la direction de la position angulaire incluse dans la plage angulaire qui a reculé à concurrence d'une quantité de recul M par rapport à la plage angulaire qui a été détectée en dernier lieu par le capteur de rotation, M étant égal à 2, N étant égal à 1 ; dans lequel, lorsqu'une plage angulaire, qui possède une avance de l'ordre de deux par rapport à une plage angulaire ancienne qui englobe la position d'arrêt, a été détectée, une nouvelle position angulaire de la position d'arrêt cible est déterminée entre l'ancienne plage angulaire qui englobe la position d'arrêt et la plage angulaire qui a été détectée.

7. Appareil électromécanique (100) selon l'une quelconque des revendications 1 à 6, qui comprend en outre :
un bouton d'actionnement (120) ; et
un mécanisme de déplacement (143) qui déplace le bouton d'actionnement le long d'une voie prédéterminée, en fonction de la rotation de l'arbre rotatif (132) ;
dans lequel le bouton d'actionnement met en œuvre une transmission par commutation.

8. Appareil électromécanique (100) selon la revendication 7, qui comprend en outre :
un capteur de position (151) qui détecte une position du bouton d'actionnement ;
dans lequel l'unité de commande de moteur (181) démarre une commande d'arrêt de l'arbre rotatif (132) lorsqu'il a été détecté, par l'intermédiaire du capteur de position, que le bouton d'actionnement a atteint une position prédéterminée.

9. Procédé de commande d'arrêt destiné à un appareil électromécanique (100) qui englobe : un moteur (130) qui englobe un arbre rotatif (132) et qui applique sur l'arbre rotatif (132) un couple dans une direction orientée vers une position angulaire d'une position d'arrêt cible (P3) en conformité avec la commande ; un capteur de rotation (134) qui détecte une position angulaire de l'arbre rotatif (132) ; ainsi qu'une unité de commande de moteur (181) qui commande la rotation de l'arbre rotatif (132) du moteur (130) en conformité avec la position angulaire qui a été détectée par le capteur de rotation ;
le procédé de commande d'arrêt comprenant le fait de :
appliquer, dans un cas dans lequel l'arbre rotatif (132) doit être arrêté, un couple, dans une direction orientée vers la position angulaire de la position d'arrêt cible (P3), à l'arbre rotatif (132) ;
**caractérisé par** le fait de :
faire passer, lorsque la position angulaire (P5) qui a été détectée par le capteur de rotation dépasse la position angulaire de la position d'arrêt cible (P3) à concurrence d'une quantité prédéterminée, la position angulaire de la position d'arrêt cible (P3) à une position angulaire (P4) qui est située entre la position angulaire de la position d'arrêt cible (P3) et la position angulaire (P5) qui a été détectée par le capteur de rotation ;
dans lequel la position d'arrêt cible est soumise à un décalage pas à pas dans la direction de rotation.
